# EUROPÄISCHE PATENTSCHRIFT

(11) **EP 1 630 401 B1**
(45) Veröffentlichungstag und Bekanntmachung des Hinweises auf die Patenterteilung: **06.06.2007**
(21) Anmeldenummer: 05105850.1
(22) Anmeldetag: 30.06.2005
(51) Int. Cl.: F02M 21/02, F02B 43/10

(54) **Mit Wasserstoff betreibbare Brennkraftmaschine sowie Betriebsverfahren hierfür**
Hydrogen powered internal combustion engine and operating method therefore
Moteur à combustion interne à hydrogène et son procédé de fonctionnement

(30) Priorität: 24.08.2004 DE 102004040895
(43) Veröffentlichungstag der Anmeldung: 01.03.2006
(73) Patentinhaber: Bayerische Motoren Werke Aktiengesellschaft, 80809 München (DE)
(72) Erfinder: Kresse, Timo, 80469 München (DE); Fickel, Hans, 85368 Moosburg (DE); Heller, Klaus, 80796 München (DE); Hallmannsegger, Michael, 81479 München (DE)

(56) Entgegenhaltungen:
- DE-A1- 2 407 706
- DE-A1- 2 522 972
- DE-A1- 3 014 464
- US-A- 4 214 699

## Beschreibung

Die Erfindung betrifft ein Betriebsverfahren für eine mit Wasserstoff betreibbare Brennkraftmaschine, mit äußerer und/oder innerer Gemischbildung, wobei der Wasserstoff aus einem Kraftstoff-Tank über zumindest ein geeignetes Ventil in die Sauganlage oder den Brennraum der Brennkraftmaschine eingeführt wird. Zum bekannten Stand der Technik wird neben der DE-C-25 22 972 auf die DE-A-24 07 706 verwiesen.

Im Entwicklungsstadium befinden sich derzeit Verbrennungsmotoren oder Brennkraftmaschinen, die mit Wasserstoff betrieben werden, wobei eine äußere sequentielle oder kontinuierliche Gemischbildung oder eine innere Gemischbildung vorgesehen ist, d.h. einem pro Arbeitsspiel in einen Brennkraftmaschinen-Zylinder eingesaugten Luftmassenstrom wird eine bestimmte Masse von Wasserstoff zugeführt. Die entstehende Gemischzusammensetzung bzw. Gemischqualität bestimmt dabei den jeweiligen Lastpunkt. Dabei kann die äußere Gemischbildung kontinuierlich oder sequentiell dargestellt werden. Kontinuierlich bedeutet, dass der Wasserstoff über die komplette Dauer eines Arbeitspiels in ein Saugrohr des jeweiligen Zylinders eingeblasen wird. Die geforderte Masse wird dabei über ein zentrales Regel-Ventil eingestellt. Im Gegensatz dazu arbeitet die äußere sequentielle Einblasung mit von einer elektronischen Steuereinheit angesteuerten sog. Einblase-Ventilen. Die Wasserstoffmasse wird über die Öffnungsdauer dieser Ventile, die meist nur einen kleinen Teil eines Arbeitsspiels beträgt, bestimmt, wobei die zeitliche Lage des Einblasepulses frei wählbar ist. Nach dem gleichen Prinzip arbeitet die innere Gemischbildung, jedoch wird hierbei der Wasserstoff über sog. Injektoren, die ebenfalls Ventile darstellen und im weitern als solche bezeichnet werden, direkt in den (jeweiligen) Brennraum der Brennkraftmaschine eingebracht. Des weiteren ist bei heutigen Wasserstoff-Verbrennungsmotoren aus Sicherheitsgründen ein motornahes Absperrventil verbaut, das es ermöglicht, die Wasserstoffzufuhr vom Tank schnell zu unterbrechen.

Weiterer bekannter Stand der Technik sind Metallhydridspeicher, in denen Wasserstoff abgelagert werden kann, und zwar über eine chemische Anlagerung von Wasserstoff an einem Metall unter Wärmefreisetzung. Die dabei entstehende Wärme muss abgeführt, d.h. der Speicher gekühlt werden, da andernfalls diese Reaktion zum Stillstand kommt. Um den Wasserstoff wieder freizusetzen, wird dem Speicher Wärme zugeführt. (vgl. hierzu DE-C-25 22 972). Die Aufnahmegeschwindigkeit und die Abgabegeschwindigkeit des Metallhydridspeichers sind dabei vom gewählten Metall sowie der erbrachten Heizleistung und Kühlleistung abhängig. Gemäß der DE-A-24 07 706 kann ein solcher Metallhydridspeicher zusätzlich zu einem kryogenen Wasserstoff-Tank als sog. Pufferspeicher für kurzzeitige größere Wasserstoff-Bedarfe der Brennkraftmaschine vorgesehen sein.

Wird eine Wasserstoff-Brennkraftmaschine nach heutigem Stand der Technik abgestellt, so schließen das weiter oben genannte Absperrventil sowie das zentrale Regel-Ventil bei kontinuierlicher Gemischbildung bzw. die Einblase-Ventile bei sequentieller Gemischbildung oder die Ventile bzw. Injektoren für die innere Gemischbildung, d.h. für die Einspritzung in den oder die Brennräume der Brennkraftmaschine. Somit wird Wasserstoff mit dem zuletzt gefahrenen Betriebsdruck in diesem Leitungsabschnitt der Kraftstoffleitung zwischen dem Absperrventil und dem Regel-Ventil bzw. den Einblase-Ventilen bzw. den Injektor-Ventilen eingeschlossen. Da jedoch die die Abgabe von Wasserstoff steuernden Ventile, d.h. das zentrale Regel-Ventil oder die genannten Einblase-Ventile oder die sog. Injektor-Ventile nicht hermetisch dicht schließend gefertigt werden können und somit eine geringe Leckage haben, kann dann eine geringe Menge von Wasserstoff langsam in die Sauganlage oder den jeweiligen Brennraum der Brennkraftmaschine gelangen, was grundsätzlich unerwünscht ist. Zwar kann durch Vorsehen einer Abblaseleitung verhindert werden, dass sich in der Sauganlage oder im Brennraum ein zündfähiges Gemisch bildet, jedoch bleiben Restbestände von Wasserstoff dann weiterhin in der Sauganlage oder im Brennraum, die bei einem nachfolgenden Start der Brennkraftmaschine zu Verbrennungsanomalien führen können. Unerwünscht ist aber auch das Abblasen auch geringer Mengen von Wasserstoff in die Umgebung, nicht zuletzt deshalb, weil dies einen Energieverlust darstellt.

Noch problematischer stellt sich diese Situation dar, wenn kryogen gespeicherter Wasserstoff kryogen bzw. tiefkalt bspw. in das Saugrohr der Brennkraftmaschine eingeblasen wird, was grundsätzlich bei Betrieb der Brennkraftmaschine äußerst vorteilhaft ist, da der kalte Wasserstoff die einströmende Luft abkühlt, wodurch die Gemischdichte steigt. Entsprechendes gilt auch bei Direkteinspritzung von kryogenem Wasserstoff in die Brennräume der Brennkraftmaschine. Da jedoch tiefkalter Wasserstoff eine wesentlich höhere Dichte als Wasserstoff bei Umgebungstemperatur besitzt, befindet sich beim Abstellen der Brennkraftmaschine eine größere Masse von Wasserstoff bei sehr tiefer Temperatur in dem Leitungsabschnitt zwischen dem besagten Absperrventil und dem oder den den Wasserstoff abgebenden Ventil(en). Durch Wärmeeintrag in diese Leitung wird sich der Wasserstoff erwärmen und ausdehnen, so dass der Druck steigt. Zwar kann auch hierbei über die bereits genannte Abblaseleitung entlastet werden, jedoch abermals (bzw. verstärkt) mit den geschilderten Nachteilen.

Eine Abhilfemaßnahme für diese geschilderte Problematik aufzuzeigen, ist daher Aufgabe der vorliegenden Erfindung.
Die Lösung dieser Aufgabe ist für ein Betriebsverfahren für eine mit Wasserstoff betreibbare Brennkraftmaschine nach dem Oberbegriff des Anspruchs 1 dadurch gekennzeichnet, dass ein an die zu dem oder den genannten Ventil(en) führende Kraftstoffleitung angeschlossener Festkörperspeicher, insbesondere Metallhydridspeicher, bei Betrieb der Brennkraftmaschine soweit erwärmt wird, dass er im wesentlichen frei von Wasserstoff ist, während bei abgestellter Brennkraftmaschine eine ausreichende Wärmeabfuhr am Festkörperspeicher bzw. Metallhydridspeicher gewährleistet ist, so dass in der Kraftstoffleitung befindlicher Wasserstoff im Festkörperspeicher bzw. Metallhydridspeicher gespeichert wird.

Vorgeschlagen wird somit, an die den Wasserstoff zum jeweiligen, den Wasserstoff abgebenden Ventil (Regel-Ventil oder Einblase-Ventil oder Injektor-Ventil) führende Kraftstoffleitung einen geeigneten Festkörperspeicher zur Zwischen-Speicherung von Wasserstoff, vorzugsweise einen Metallhydridspeicher, anzubringen, der die nach einem Abstellen der Brennkraftmaschine in dieser Leitung bzw. diesem Leitungsabschnitt befindliche Wasserstoffmasse aufnehmen und zwischenspeichern kann, und zwar bis zum nächsten Betrieb der Brennkraftmaschine, bei dem diese zwischengespeicherte Masse von Wasserstoff der Brennkraftmaschine wieder als Kraftstoff zugeführt wird. Auf diese Weise wird weder die Umgebung mit austretendem Wasserstoff belastet, noch wird Energie verschwendet. Dabei kann der vorgeschlagene Festkörperspeicher mit seiner Verbindungsleitung an die zu den genannten Ventilen führende Kraftstoffleitung anstelle der weiter oben genannten Abblaseleitung angeschlossen sein.

Bevorzugt ist der Metallhydridspeicher (bzw. allgemein Festkörperspeicher) hinsichtlich seiner Größe so ausgelegt, dass er die theoretisch maximale Masse Wasserstoff, die sich in der Kraftstoffleitung befindet, aufnehmen kann. Eine grobe Abschätzung ergibt einen Leitungsinhalt von ca. 1 Gramm Wasserstoff. Geht man von einem Gewichtsverhältnis von 1/100 aus, würde ein Metallhydridspeicher ca. 100 Gramm wiegen und ein Volumen von ca. 0,2 Liter haben. Um eine gewisse Sicherheit zu gewährleisten sollte der Speicher auf die ca. dreifache Masse ausgelegt werden. Dieses, trotz der einkalkulierten Sicherheit, immer noch kleine Volumen ist gut sehr nahe an der Sauganlage der Brennkraftmaschine platzierbar, so dass die Leitung zum Metallhydridspeicher sehr kurz gehalten werden kann.

Des weiteren sollte die Beladungsgeschwindigkeit des Festkörperspeichers bzw. Metallhydridspeichers möglichst genau auf die vorliegenden Betriebsbedingungen ausgelegt sein. Sie sollte so hoch gewählt werden, dass der Betriebsdruck in der genannten Kraftstoffleitung schnell abgebaut wird und insbesondere bei kryogener Gemischbildung trotz Wärmeeintrag in die Kraftstoffleitung dort keine Druckerhöhung stattfindet.

Die Steuerung, ob der Metallhydridspeicher/Festkörperspeicher Wasserstoff aufnimmt oder abgibt, kann über ein gezieltes Wärmemanagement erfolgen, das vorzugsweise den Betriebstemperaturen in der Umgebung der Brennkraftmaschine, die bspw. im Motorraum eines Kraftfahrzeugs eingebaut sein kann, angepasst ist. Während des Betriebs der Brennkraftmaschine (und somit des Kraftfahrzeugs) muss dem Festkörperspeicher entsprechend seiner Auslegung Wärme zugeführt werden, damit er den zuvor gespeicherten Wasserstoff abgibt bzw. keinen neuen Wasserstoff aufnimmt, sofern er leer ist. Als Wärmequelle kommen bspw. eine elektrische Zuheizung oder die Nutzung der Abgaswärme der Brennkraftmaschine in Frage. Wird hingegen die Brennkraftmaschine abgestellt, so muss diese Wärmezufuhr gestoppt werden, damit der Festkörperspeicher in den Temperaturbereich der Wasserstoffaufnahme kommt. Die dabei entstehende Wärme muss abgeführt werden, was bspw. über eine aktive Kühlung oder über eine ausreichend große Oberfläche der Speicherhülle realisiert werden kann.

Falls bspw. auslegungsbedingt dem Metallhydridspeicher (oder dgl.) nicht genügend Wärme zur Vermeidung einer Wasserstoffaufnahme während des Betriebs der Brennkraftmaschine der zugeführt werden kann, so kann in der Verbindungsleitung zwischen der besagten das oder die genannte(n) Ventil(e) versorgenden Kraftstoffleitung und dem Metallhydridspeicher ein geeignetes (weiteres) Absperrventil vorgesehen sein, das dem jeweiligen Betriebszustand entsprechend geschaltet wird, d.h. bei abgestellter Brennkraftmaschine geöffnet wird und auch bei Betrieb der Brennkraftmaschine solange geöffnet ist, bis der (beladene) Metallhydridspeicher im wesentlichen entladen ist, ansonsten jedoch bei Betrieb der Brennkraftmaschine geschlossen bleibt.

Mit einem vorgeschlagenen Betriebsverfahren kann somit die Sauganlage bzw. der oder die Brennraum/Brennräume einer mit Wasserstoff als Kraftstoff betriebenen Brennkraftmaschine bei abgestellter Brennkraftmaschine sicher und effizient von Wasserstoff freigehalten werden. Es strömt kein Wasserstoff in die Sauganlage oder den Brennraum, so dass eine Bildung eines zündfähiges Gemisch darin mit Sicherheit ausgeschlossen ist. Des weiteren kann die Brennkraftmaschine bei Bedarf sofort gestartet werden, da der Wasserstoff nur kontrolliert in Saugrohr und Brennraum einströmt und somit keine unvorhergesehenen Verbrennungsanomalien auftreten. Besonders vorteilhaft ist dabei die Vermeidung des Abblasens zur Entlastung der besagten Kraftstoffleitung. Der Wasserstoff geht nicht verloren, sondern wird zwischengespeichert und beim nächsten Start der Brennkraftmaschine zugeführt. Die Reichweite eines Kraftfahrzeugs mit einer solchen Brennkraftmaschine wird dadurch vergrößert. Bemerkenswert ist ferner, dass hiermit ein Schritt zu einem abblasefreien mit Wasserstoff betriebenen Kraftfahrzeug vollzogen wird, wobei durchaus eine Vielzahl von Details abweichend von obigen Erläuterungen gestaltet sein kann, ohne den Inhalt der Patentansprüche zu verlassen.

## Patentansprüche

1. Verfahren zum Betrieb einer Brennkraftmaschine mit Wasserstoff als Kraftstoff, mit äußerer und/oder innerer Gemischbildung, wobei der Wasserstoff aus einem Kraftstoff-Tank über zumindest ein geeignetes Ventil in die Sauganlage oder den Brennraum der Brennkraftmaschine eingeführt wird,
**dadurch gekennzeichnet, dass** ein an die zu dem oder den genannten geeigneten Ventil(en) führende Kraftstoffleitung angeschlossener Festkörperspeicher zur Speicherung von Wasserstoff bei Betrieb der Brennkraftmaschine soweit erwärmt wird, dass er im wesentlichen frei von Wasserstoff ist, während bei abgestellter Brennkraftmaschine eine ausreichende Wärmeabfuhr am Festkörperspeicher gewährleistet ist, so dass in der Kraftstoffleitung befindlicher Wasserstoff im Festkörperspeicher gespeichert wird.

2. Verfahren nach Anspruch 1,
**dadurch gekennzeichnet, dass** der Festkörperspeicher als Metallhydridspeicher ausgebildet ist.

3. Verfahren nach Anspruch 1 oder 2
**dadurch gekennzeichnet, dass** der Festkörperspeicher stromab eines Absperrventils von der vom Kraftstoff-Tank zur Brennkraftmaschine führenden Kraftstoffleitung abgezweigt ist, wobei in der zum Festkörperspeicher führenden Zweigleitung gegebenenfalls ein weiteres Absperrventil vorgesehen ist.

## Claims

1. A method for operating an internal combustion engine with hydrogen as the fuel, with external and/or internal mixture formation, wherein the hydrogen is introduced into the suction system or the combustion chamber of the internal combustion engine from a fuel tank via at least one suitable valve, **characterised in that** a solid store connected to the fuel line leading to said suitable valve(s) for storing hydrogen during operation of the internal combustion engine is heated to such an extent that it is substantially free of hydrogen, while, when the internal combustion engine is switched off, adequate heat removal is ensured at the solid store, so hydrogen located in the fuel line is stored in the solid store.

2. A method according to claim 1, **characterised in that** the solid store is configured as a metal hydride store.

3. A method according to claim 1 or 2, **characterised in that** the solid store is branched off, downstream from a check valve, from the fuel line leading from the fuel tank to the internal combustion engine, wherein a further check valve is optionally provided in the branch line leading to the solid store.

## Revendications

1. Procédé pour faire fonctionner un moteur à combustion interne en utilisant de l'hydrogène en tant que carburant, avec formation externe et/ou interne de mélange amene à l'installation d'admission ou à la chambre de combustion du moteur, de l'hydrogène provenant d'un réservoir par l'intermédiaire d'au moins une soupape appropriée,
**caractérisé en ce qu'**
un accumulateur de corps solide est raccordé à la conduite de carburant aboutissant à la ou aux soupapes appropriées citées et destiné à stocker du carburant quand le moteur fonctionne, et il est chauffé jusqu'à ce qu'il soit essentiellement vidé de son hydrogène, tandis que quand le moteur est arrêté, un apport suffisant de chaleur est assuré à l'accumulateur de corps solide, de manière que le carburant se trouvant dans la conduite de carburant est stocké dans l'accumulateur de corps solide.

2. Procédé selon la revendication 1,
**caractérisé en ce que**
l'accumulateur de corps solide est un accumulateur d'hydrure métallique.

3. Procédé selon la revendication 1 ou 2,
**caractérisé en ce que**
l'accumulateur de corps solide, en aval d'une soupape d'arrêt, est monté en dérivation de la conduite de carburant allant du réservoir au moteur, et dans cette conduite dérivée conduisant à l'accumulateur est prévue le cas échéant une autre soupape d'arrêt.
